# EUROPEAN PATENT APPLICATION

(11) **EP 1 431 254 A2**
(43) Date of publication of application: **23.06.2004**
(21) Application number: 03026276.0
(22) Date of filing: 14.11.2003
(51) Int. Cl.: C03B 37/018

(54) **Manufacture of optical fiber prefroms using high pressure doping**

(30) Priority: 16.12.2002 US 320193
(71) Applicant: FITEL USA CORPORATION (a Delaware Corporation), Norcross, Georgia 30071 (US)
(72) Inventor: Digiovanni, David J., Montclair NJ 07042 (US); Windeler, Robert S., Annandale NJ 08801 (US)
(74) Representative: Schoppe, Fritz, Dipl.-Ing.

(57) **Abstract**

Fluorine doping of trench layers in MCVD preforms is enhanced by exposing a silica soot layer, produced by MCVD, to a fluorine-containing gas at high pressure. The high pressure exposure is integrated into the MCVD process.

## Description

### Field of the Invention

This invention relates to methods for making optical fibers having enhanced doping levels, and attendant enhanced index profiles.

### Background of the Invention

Doping optical fiber preforms to tailor the refractive index profile of the optical fiber drawn from the preform is routinely practiced. Index profiles are becoming more complex as new fiber designs are discovered. Doping processes to implement these complex profiles are in high demand. Advances in doping techniques are even likely to open new possibilities for index profile shaping.

Among the more challenging index profiles to manufacture are those with both raised and lowered index features. The terms raised and lowered are with reference to the intrinsic refractive index of undoped silica. The lowered portion of the profile is typically associated with the optical fiber cladding, and fibers with this characteristic are sometimes referred to as depressed clad optical fibers.

Depressed clad optical fibers were developed in the early 1980's as an alternative to fibers with doped cores and less heavily doped, or undoped cladding. See, e.g., U.S. Patent No. 4,439,007. Depressed cladding allows the use of fiber cores with relatively low doping, or no doping at all. These cores produce low optical loss.

Applications have been developed for both single mode and multimode depressed clad fibers, and a variety of processes for the manufacture of depressed clad fibers have also been developed. See e.g. U.S. Patent No. 4,691,990, the disclosure of which is incorporated herein by reference.

Recently, there has been a renewed interest in depressed clad fibers for lightwave systems in which control of non-linear effects is important. For example, in four-wave mixing of optical frequencies in the 1.5-1.6 mm wavelength region where DWDM networks operate, a low slope, low dispersion fiber is required. A fiber structure that meets this requirement is one with multiple claddings including one or more of down-doped silica.

One technique for making depressed clad fibers is to dope the cladding of a silica core fiber with fluorine or boron, which produces cladding with a refractive index less than the silica core. For example, fibers with negative refractive index variations, Δn , in the range 0.05 - 0.7 % can be obtained using fluorine doping.

More recently, fibers with down doped core regions have been proposed which have a core shell doped with fluorine and a center region doped with a conventional dopant such as germanium. This produces a modified "W" index profile and is found to be desirable for dispersion control. In some cases it is desirable to down-dope the central region of the core in designs referred to as co-axial designs. Such designs are useful for increasing the diameter of the optical field.

Fibers with depressed index cores or cladding can be produced using any of the conventional optical fiber production techniques, which include rod in tube processes, Modified Chemical Vapor Deposition (MCVD), Plasma enhanced Chemical Vapor Deposition (PCVD) (inside tube deposition processes), and VAD or OVD (outside tube deposition processes). For reasons that will become apparent below, this invention is directed to inside tube deposition processes, i.e. methods wherein the doped layers are produced by depositing material on the inside surface of a preformed tube. The dominant species of this method is MCVD.

In MCVD processes for making fluorine doped preforms, typically where a steep step in the index is required, relatively high doping levels are desired. Using known techniques this is obtained by depositing an undoped soot layer, and "soaking" the soot layer with fluorine-containing gas atmosphere with the soot layer still in the porous state, i.e. prior to consolidation. The porosity of the soot layer at this stage in the process allows the fluorine gas to easily permeate through the entire thickness of the layer, essentially stopping at the interface between the soot layer and the solid glass preform tube. Similarly, where an up-doped layer is to be followed by a down-doped layer, the up-doped layer may be deposited as soot, and consolidated prior to soaking, to minimize diffusion of fluorine into the up-doped layer.

The concentration of fluorine in the soot is either equilibrium or diffusion limited. The glass composition depends on the soot particle size, the partial pressure of the fluorine-containing glass, and the time-temperature history of the soot while being exposed to the fluorine-containing gas. When sufficient time is allowed for complete dopant diffusion, the concentration of fluorine in the glass appears limited by fixed equilibrium conditions that often depend on the partial pressure of a dopant species during processing.

Methods for increasing doping levels of impurities in optical fibers would significantly advance the art. These would offer the potential for either enhanced doping levels, or shorter processing time to reach conventional doping levels, or both.

### Summary of the Invention

We have discovered a fluorine doping process for optical fiber preforms that allows higher doping levels and reduced process time. Either or both of the ends are achieved using high pressure inside the MCVD tube. It is recognized that while the conventional MCVD system is not amenable to high pressure processing, the MCVD tube itself may withstand pressures of several atmospheres. This allows high pressure during the doping step to be confined essentially to the MCVD tube. Alternatively, the MCVD system may be modified for high pressure processing. Introducing dopants from a gaseous precursor source into glass soot at high pressure increases the amount incorporated. The surface regions of the individual particles in the porous body are doped to levels exceeding the levels dictated by equilibrium at atmospheric pressure. Final doping levels are dictated by the degree of solid/solid diffusion. The latter preferably occurs during the consolidation step. Therefore much of the time required for diffusion of the dopant to a uniform level is combined with the heating step for consolidation, thus effecting a significant time saving.

### Brief Description of the Drawing

Fig. 1 is a schematic diagram of an MCVD apparatus;
Figs. 2-4 are highly stylized representations of an equilibrium doping process; and

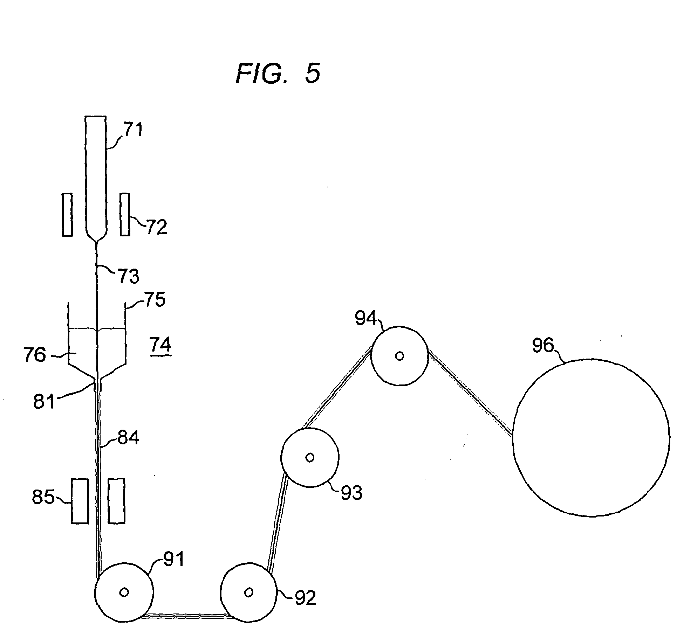

Fig. 5 is a schematic representation of an optical fiber drawing apparatus.

### Detailed Description

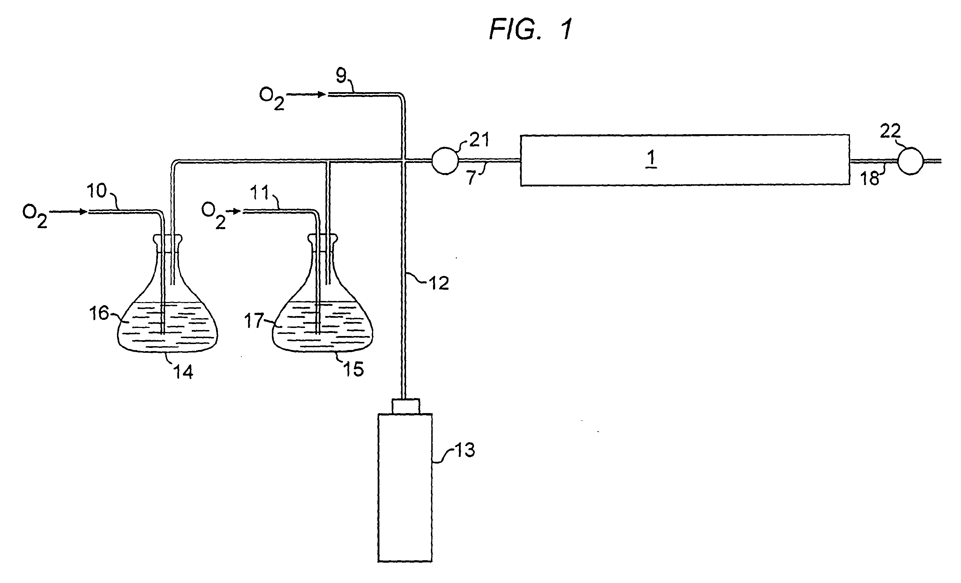

Fig. 1 shows schematically a typical MCVD apparatus with particular emphasis on the gas delivery system (the details of the MCVD lathe are omitted). The MCVD tube is shown generally at 1. The tube is typically heated locally and rotated by means not shown to effect uniform deposition of soot and dopants on the interior surface of the tube. A gaseous material is introduced into tube 1 via inlet tube 7, which, in turn, is connected to source material reservoirs. Such reservoirs may include an oxygen inlet 9, and dopant sources indicated generally at 14 and 15. The dopant sources contain normally liquid reactant material 16 and 17, which are conveyed to the MCVD tube using a delivery system that includes a carrier gas introduced through inlets 10 and 11. The reservoirs 14 and 15 are routinely referred to as bubblers. Additionally, some dopant precursors may be derived from gaseous sources. Exiting gas is exhausted through outlet 18. Not shown is the arrangement of mixing valves and shut off valves that are typically used to meter flows and adjust the flowing gas composition. Details of the MCVD process and suitable apparatus are well known in the art and are not reproduced here. The focus of this description is control of the atmospheric pressure within the tube 1 during the incorporation of dopants into the preform body. Shown schematically in the figure are pressure control means 21 and 22 for monitoring and controlling the atmospheric pressure inside the tube.

It should be emphasized that the pressures used for the method of the invention are very high in the context of conventional MCVD processing. Therefore the conventional MCVD apparatus may be modified to allow for applying the high pressure. It may be evident that the preferred technique for controlling the pressure within the MCVD tube is that shown in the figure, i.e. with pressure control means at or near the tube inlet and outlet. In a typical apparatus, portions of the gas delivery system, for example, the bubblers 14 and 15, may not withstand the high pressures involved in the process of the invention. If the entire gas delivery system of a conventional system is pressurized, elements of the system may fail. Notably, typical MCVD tubes themselves are capable of withstanding the high pressures of the invention. Therefore the arrangement shown is effective and preferred. The ends of the MCVD tube are suitably sealed with high pressure sealing means. Pressure monitoring and control means, 21 and 22 are provided as shown. The inlet and outlet tubes, 7 and 18 in the figure, which connect the pressure control assemblies 21 and 22 to the sealed ands of the MCVD tube, are preferably made to withstand the high pressures of the invention. Metal tubes of, for example, stainless steel, are suitable for this purpose. Alternatively, a pressure control baffle may be applied directly to the ends of the tube.

Those skilled in the art will recognize that other apparatus can be designed wherein the entire has delivery system is designed for high pressure. Such an apparatus may be made wherein all of the components of the gas delivery system are capable of withstanding high pressure. However, in the embodiments of the invention wherein the high pressure is used in a "soaking" mode, i.e. where there is only gas delivery from high pressure sources (SiF₄ for example) during the high pressure doping step, it will be evident that it may not be necessary or cost effective to modify the entire system for high pressure operation.

It is known that MCVD tubes are susceptible to distortion when the tube glass is heated to the softening temperature of the glass. To prevent this, use of internal pressure both during tube collapse and/or during soot deposition has been proposed in the prior art for maintaining the tube geometry. See, e.g., U.S. Patent No. 6,105,396. Internal tube pressures in these cases are typically far below one atmosphere, for example, typically on the order of 1/1000 atmospheres, to avoid "ballooning" of the tube.

The high pressure doping method of the invention will be described in the context of making down-doped layers in a MCVD preform. The dopant in the example is fluorine, and can be provided in any suitable gaseous form. A preferred source is SiF₄. However, it should be pointed out that the invention may be practiced for other dopant species, for example, boron or phosphorus. Boron, in common with fluorine, is a down-dopant. Phosphorus is used in some application in relatively large concentrations for compensating the effect of other dopants. For example, in doping glass with certain rare earth ions, typically for lasers or amplifiers, it is known that aluminum aids in solubilizing the rare earth in the glass composition. Hence an appreciable amount of aluminum is typically added to the glass composition. However, the aluminum affects the refractive index of the preform. The addition of phosphorus, typically in a range of 1-8% for example, will compensate for the aluminum addition. Both boron and phosphorus may be supplied as halide compounds, for example BF₃ and POCl₃. It should be recognized that increasing the pressure may increase, decrease, or leave unchanged, the dopant equilibrium concentration in the glass, depending on the incorporation reaction and the law of mass action. For example, fluorine incorporation is governed by:

3SiO₂(s) + SiF₄(g) = 4 SiO_{1.5}F(s) (1)

So that the concentration of F in the glass, X_{F}, depends on the partial pressure of SiF₄ as

X_{F} = a_{SiO2}^{3/4} P_{SiF4}^{1/4} (2)

In the MCVD process the first layer or layers are cladding layers, or outside core layers. For some profiles one or more of these may be up-doped, typically using Ge. In most state of the art fiber profiles, the cladding contains a trench region. This is a down-doped layer, usually a fluorine-doped layer. To minimize interdiffusion, and "smearing" of the profile, any layers deposited prior to the fluorine doped layer are consolidated. Then the soot for the trench region is deposited on the solid glass interior of the tube. In the example reported here, the trench region is deposited as pure silica soot, then doped with fluorine.

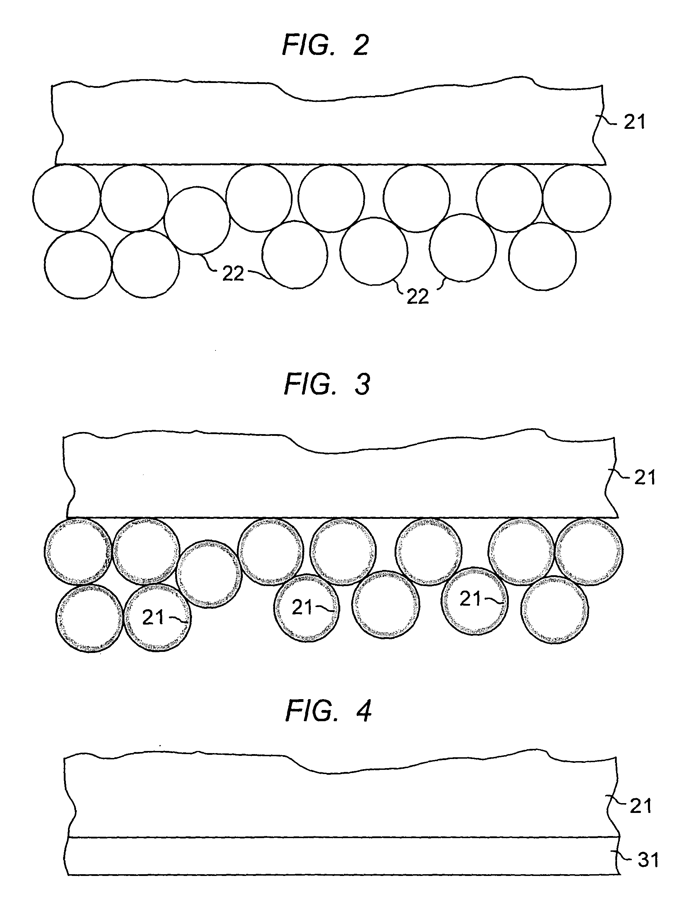

A fluorine gas atmosphere is introduced into the tube 1 (Fig. 1) to provide the fluorine dopant for the porous cladding tube. The usual fluorine source is SiF₄. Molecular SiF₄ permeates into the soot layer and, due to the porosity of the soot, penetrates the entire thickness of the particulate soot layer. The MCVD tube is heated to a temperature in the range 1000-1800 °C to enable the fluorine to diffuse into the soot particles. In this temperature range, the soot particles also slowly sinter into a solid layer. As the temperature is increased these two processes both increase exponentially. The situation of incomplete diffusion is illustrated by Figs.2 and 3. Fig. 2 shows a portion 21 of the inside surface of the MCVD tube. At this point in the process the inside of the tube may already carry deposited, and consolidated, layers (as mentioned above). The portion 21 of the tube wall is preferably solid glass. The soot particles for the doped fluorine layer are shown at 22. These are conventional silica soot particles produced by standard MCVD. After soot deposition, the dopant gas, in this case SiF₄, is admitted to the tube at high pressure. Fig. 3 represents the result of the exposure, showing particles 22 doped with fluorine 24. The diffusion proceeds from the surface of the particle, which is exposed to the fluorine atmosphere, toward the center of the particle. As shown in Fig. 3, diffusion is incomplete. Fig. 4 shows the preform after consolidation, i.e. the particles fuse into a continuous solid glass layer 31. It is intuitively evident that the average concentration of dopant in the layer is limited by the diffusion of fluorine into the glass.

In some instances, it may be desirable to process the soot using the conditions described above in which the diffusion of F into the silica particles is incomplete. In such cases, the outside of the particles are doped to the maximum determined by the thermodynamics of the process, but the interior is relatively undoped. Upon sintering, the final concentration and the Δn will be determined by an average value. In this way, the doping time or temperature, rather than the doping pressure, can be used to control final average doping level.

The equilibrium limited case is when the diffusion proceeds to completion. In this situation, the entire soot particle is allowed to reach its equilibrium concentration with the dopant gas. Under these conditions the concentration in the glass will increase with an increase in the partial pressure of the gas dopant.

It is recognized that conventional doping steps in MCVD processes vary from equilibrium doping to diffusion-limited doping depending on the dopant species and the processing conditions. For the case of fluorine doping concentration is determined by equilibrium conditions established during the sintering step of layer formation, and it is also recognized that the Δn is proportional to the SiF₄ partial pressure to the quarter power:

Δn ∼ P^{1/4} (3)

The dynamics of the equilibrium method will be described briefly.

The equilibrium partial pressures of SiF₄ corresponding to doping levels of Δn = 0.001 - 0.003 are 1 x 10⁻⁴ - 8.0 x 10⁻³, respectively. As the paritla pressure of the SiF₄ is increased the index becomes more negative. The partial pressure can be increased over one atmosphere by pressurizing the MCVD tube. However, if the temperature of the tube is too high, even a slight overpressure, for example, 1/1000 atm may cause ballooning of the tube. The temperature at which this occurs will vary depending on the glass composition and is defined here as the softening temperature. It is easily determined by for a given variety of MCVD tube by pressurizing the tube to an elevated pressure of at least 1/1000 atm and heating the tube to create ballooning. The temperature at which ballooning occurs is defined as the softening temperature. As mentioned above, since the concentration of F in the consolidated layer is determined during the sintering conditions, some of the dopant may diffuse away during sintering. To avoid excessive out-diffusion of the dopant during sintering it is desirable to balance the rates of diffusion and sintering. A simple means of achieving this is to separate the doping and sintering steps. That is, the porous soot is exposed to dopant gas at elevated temperature and pressure for a period of time to facilitate diffusion to the desired degree. Then the pressure is decreased to close to atmospheric pressure whereupon the soot is sintered.

Alternatively, both doping and sintering may occur simultaneously, or the steps may overlap in time, if the sintering time is short relative to the diffusion process.

The characteristic diffusion time is given by particle diameter squared, divided by the diffusion coefficient. The characteristic sintering time is given by the viscosity time the particle diameter divided by the surface tension. These characteristic times may be altered by adjusting the particle diameter and/or the glass viscosity. In general, for rapid diffusion small particles are desired. If the diffusion step and the sintering step are simultaneous, or overlap, out-diffusion is inherently reduced by the effect of small particles agglomerating or coalescing into larger glass masses during sintering, thus effectively trapping the dopant.
Viscosity may also be used to control relative diffusion and sintering. The MCVD tube may be made with additives such as boron, phosphorus, potassium, sodium, to reduce the glass viscosity and render it less susceptible to ballooning. Alternatively, a viscosity reducing dopant as just mentioned can be added during or after F doping.

After the desired number of doped layers are deposited and consolidated, the perform is then collapsed by known techniques, and used for drawing optical fiber in the conventional way. Fig. 7 shows an optical fiber drawing apparatus with preform 71, and susceptor 72 representing the furnace (not shown) used to soften the glass preform and initiate fiber draw. The drawn fiber is shown at 73. The nascent fiber surface is then passed through a coating cup, indicated generally at 74, which has chamber 75 containing a coating prepolymer 76. The liquid coated fiber from the coating chamber exits through die 81. The combination of die 81 and the fluid dynamics of the prepolymer, controls the coating thickness. The prepolymer coated fiber 84 is then exposed to UV lamps 85 to cure the prepolymer and complete the coating process. Other curing radiation may be used where appropriate. The fiber, with the coating cured, is then taken up by take-up reel 96. The take-up reel controls the draw speed of the fiber. Draw speeds in the range typically of 1-20 m/sec. can be used. It is important that the fiber be centered within the coating cup, and particularly within the exit die 81, to maintain concentricity of the fiber and coating. A commercial apparatus typically has pulleys similar to those shown at 91-94, that control the alignment of the fiber. Hydrodynamic pressure in the die itself aids in centering the fiber. A stepper motor, controlled by a micro-step indexer (not shown), controls the take-up reel.

Coating materials for optical fibers are typically urethanes, acrylates, or urethane-acrylates, with a UV photoinitiator added. The apparatus in Fig. 7 is shown with a single coating cup, but dual coating apparatus with dual coating cups are commonly used. In dual coated fibers, typical primary or inner coating materials are soft, low modulus materials such as silicone, hot melt wax, or any of a number of polymer materials having a relatively low modulus. The usual materials for the second or outer coating are high modulus polymers, typically urethanes or acrylics. In commercial practice both materials may be low and high modulus acrylates. The coating thickness typically ranges from 150-300 µm in diameter, with approximately 240 µm standard.

The following example is given to illustrate the invention.

### EXAMPLE

A silica MCVD tube is heated to 1100 °C, dehydrated with chlorine, cooled to 1000 °C, and purged with He. A Ge doped cladding layer is deposited on the inside surface of the MCVD tube and consolidated. A soot layer is then deposited on the inside surface of the MCVD tube. The soot layer is heated to 1400 °C, and exposed to 100% SiF₄ at a pressure of 4 atmospheres. The soot layer is soaked for 4 hours to deposit SiF₄ on the particles of the porous soot layer. The tube is then sintered at 1650 °C to consolidate the doped soot layer. The finished tube has a trench layer with a Δn⁻ of approximately 0.012. The MCVD tube is then further processed as needed to deposit additional layers, including core layers.

The completed preform is then collapsed by conventional methods and inserted into the apparatus of Fig. 7 for optical fiber drawing.

It should be evident that the main options described above are:
1. Dope with F at high pressure. Reduce pressure and sinter at low pressure. This allows independent choice of conditions for the two steps.
2. Dope with F at high pressure. Sinter at high pressure. This provides process economy and minimizes the effect of out-diffusion during sintering.
3. Dope with F at high pressure. Reduce pressure for sinter. Sinter in F atmosphere.

In the foregoing description, the source of fluorine is SiF₄. As evident to those skilled in the art, other sources of fluorine may be used. For example, SF₆, CF₄, BF₃, may also be suitable.

While the step sequence in the methods described above separates the soot deposition for the doped fluorine layer from the doping step, i.e. the soot is deposited, then doped, it is possible to combine these steps and dope the soot as it deposits. This is especially effective if the soot layer is thick. It also offers process economy. In this approach, it will be recognized that the entire gas flow system should be constructed to withstand the high pressure.

It is also possible to deposit the doped soot layer in increments, and consolidate each increment before the next is deposited. In this approach one pass, or a few passes, are made with the tube containing deposition gasses for both silica and dopant. A relatively thin layer of soot is deposited on the tube wall. The temperature of the torch is then raised to the consolidation temperature, and the thin deposited layer is consolidated. A thicker layer is produced by repeating these steps.

The description above relates mostly to doping with fluorine. However, it will be apparent to those skilled in the art that other dopants may be incorporated into preforms using the high-pressure technique of the invention. These include boron and phosphorus. The boron dopant species may be BCl₃. The phosphorus dopant species may be PCl₃, or POCl₃.

In concluding the detailed description, it should be noted that it will be obvious to those skilled in the art that many variations and modifications may be made to the preferred embodiment without substantial departure from the principles of the present invention. All such variations, modifications and equivalents are intended to be included herein as being within the scope of the present invention, as set forth in the claims.

## Claims

1. Process for the manufacture of optical fibers comprising:
(a) preparing an optical fiber preform,
(b) heating the preform, and
(c) drawing an optical fiber from the preform,
the invention **characterized in that** the optical fiber preform is produced by:
(i) forming by MCVD a soot layer of silica particles inside an MCVD tube,
(ii) heating the soot layer in a dopant atmosphere at a pressure of 1.0 to 10 atmospheres, to incorporate dopant into the silica particles,
(iii) heating the porous silica body to consolidate it into a solid glass layer, and
(iv) collapsing the MCVD tube to produce the preform.

2. The process of claim 1 wherein the dopant atmosphere comprises fluorine.

3. The process of claim 2 wherein the dopant atmosphere comprises SiF₄.

4. The process of claim 2 wherein the fluorine atmosphere is greater than 10% SiF₄.

5. The process of claim 1 wherein (ii) and (iii) are combined into a single step.

6. The process of claim 5 wherein the step (ii) (iii) is performed at a temperature below the softening temperature of the MCVD tube.

7. Process for the manufacture of optical fiber preforms comprising:
(a) forming by MCVD a soot layer of silica particles inside an MCVD tube,
(b) heating the soot layer in a dopant atmosphere at a pressure of 1.0 to 10 atmospheres, to incorporate dopant into the silica particles,
(c) heating the porous silica body to consolidate it into a solid glass layer, and
(d) collapsing the MCVD tube to produce the preform.

8. The process of claim 7 wherein the dopant atmosphere comprises fluorine.

9. The process of claim 8 wherein the fluorine atmosphere comprises SiF₄.

10. The process of claim 7 wherein steps (b) and (c) are combined into a single step.

11. The process of claim 10 wherein the step (b) (c) is performed at a temperature below the softening temperature of the MCVD tube.

12. The process of claim 1 further including adding a glass viscosity reducing dopant to the soot layer.

13. The process of claim 1 wherein the dopant atmosphere comprises phosphorus.

14. The process of claim 1 wherein the dopant atmosphere comprises boron.

15. The process of claim 1 wherein (i) (ii) and (iii) comprise a single step.
